# DEMANDE DE BREVET EUROPEEN

(11) **EP 3 663 733 A1**
(43) Date de publication de la demande: **10.06.2020**
(21) Numéro de dépôt: 19211794.3
(22) Date de dépôt: 27.11.2019
(51) Int. Cl.: G01J 5/02

(54) **DETECTEUR THERMIQUE A MEMBRANE SUSPENDUE COMPORTANT UNE PARTIE DEFORMABLE DE COURT-CIRCUIT THERMIQUE**

(30) Priorité: 30.11.2018 FR 1872140
(71) Demandeur: Commissariat à l'Énergie Atomique et aux Énergies Alternatives, 75015 Paris (FR)
(72) Inventeur: ALIANE, Abdelkader, 38054 GRENOBLE cedex 09 (FR); OUVRIER-BUFFET, Jean-Louis, 38054 GRENOBLE cedex 09 (FR)
(74) Mandataire: GIE Innovation Competence Group

(57) **Abrégé**

L'invention porte sur un détecteur thermique comportant un substrat (10), une membrane absorbante (20) comportant une partie fixe (21) et une partie déformable (30), celle-ci comportant un alliage à mémoire de forme, et étant disposée vis-à-vis du substrat de sorte que son extrémité libre (32) est au contact du substrat (10) à la température de contact T_{c} supérieure à la température austénitique initiale Aₛ.

## Description

### DOMAINE TECHNIQUE

Le domaine de l'invention est celui de détecteurs thermiques d'un rayonnement électromagnétique, par exemple infrarouge ou térahertz, comportant une membrane absorbante suspendue et thermiquement isolée du substrat. L'invention s'applique notamment au domaine de l'imagerie infrarouge ou térahertz, de la thermographie, voire de la détection de personne ou de mouvement.

### ÉTAT DE LA TECHNIQUE ANTÉRIEURE

Les dispositifs de détection de rayonnement électromagnétique peuvent comporter une matrice de pixels sensibles contenant chacun un détecteur thermique comportant une membrane absorbante thermiquement isolée du substrat de lecture. La membrane absorbante comporte un absorbeur du rayonnement électromagnétique à détecter associé à un transducteur thermométrique dont une propriété électrique varie en intensité en fonction de l'échauffement du transducteur. Le transducteur thermométrique peut être un matériau thermistance tel qu'un oxyde de vanadium ou du silicium amorphe, entre autres.

La température du transducteur thermométrique étant cependant grandement dépendante de son environnement, la membrane absorbante est isolée thermiquement du substrat et du circuit de lecture, celui-ci étant de préférence disposé dans le substrat. Ainsi, la membrane absorbante est généralement suspendue au-dessus du substrat par des piliers d'ancrage, et en est isolée thermiquement par des bras d'isolation thermique. Ces piliers d'ancrage et bras d'isolation thermique présentent également une fonction électrique en assurant la connexion électrique de la membrane absorbante au circuit de lecture.

Cependant, le détecteur thermique est susceptible d'être soumis à un rayonnement électromagnétique de forte puissance, tel qu'un rayonnement solaire ou un rayonnement laser. La membrane absorbante étant isolée thermiquement du substrat, elle peut alors subir un fort échauffement susceptible de provoquer une dégradation des propriétés du transducteur thermométrique.

A ce titre, la figure 1A est une vue schématique en coupe d'un détecteur thermique décrit dans la demande WO2003/002963. La membrane absorbante 20 est suspendue au-dessus du substrat 10 par des piliers d'ancrage 3 et des bras d'isolation thermique (non représentés). Elle est adaptée à se déformer sous l'effet d'un échauffement jusqu'à venir au contact du substrat 10. Ce contact provoque le refroidissement de la membrane absorbante 20, permettant ainsi d'éviter que la température de la membrane absorbante 20 n'atteigne une valeur à partir de laquelle une dégradation des propriétés du transducteur thermométrique peut avoir lieu.

Pour cela, la membrane absorbante 20 comporte deux parties 20.1 et 20.2 superposées et réalisées de sorte que la partie 20.1 présente un coefficient de dilatation thermique différent de celui de la partie 20.2. Par ailleurs, la membrane absorbante 20 comporte une protubérance 20.3 disposée en saillie vis-à-vis du plan XY de la membrane absorbante 20 et orientée en direction du substrat 10. De plus, le substrat 10 comporte un plot de contact 18 s'étendant suivant l'axe Z. Aussi, lorsque la membrane absorbante 20 présente un échauffement excessif, les deux parties superposées 20.1 et 20.2 se dilatent de manière différente (effet bilame), ce qui provoque une déformation de la membrane absorbante 20 et donc une diminution de l'espacement entre la protubérance 20.3 et le plot de contact 18 jusqu'à ce qu'il y ait contact mécanique entre ces deux éléments. La membrane absorbante 20 est alors refroidie, ce qui provoque en retour l'écartement de la protubérance 20.3 vis-à-vis du plot de contact 18. Cependant, il apparaît qu'un mouvement continu d'oscillation verticale peut se mettre en place à cause de l'alternance des phases de refroidissement au contact du substrat 10 et de réchauffement après perte du contact.

La figure 1B est une vue schématique en perspective du détecteur thermique décrit dans la demande KR101181248. La membrane absorbante 20 comporte une partie fixe de détection 21 au niveau de laquelle est disposé un matériau thermistance, et une partie déformable 30 de type bilame. Elle présente une première extrémité 31 fixée à la partie de détection 21 et une deuxième extrémité 32 opposée libre, c'est-à-dire que la deuxième extrémité 32 est mobile en déplacement suivant l'axe Z sous l'effet de la déformation de la partie déformable 30. Le fonctionnement est similaire à celui décrit précédemment : lors d'un échauffement excessif, la partie déformable 30 se déforme par effet bilame de sorte que l'extrémité libre 32 vient au contact du substrat 10, ce qui provoque le refroidissement de la membrane absorbante 20. Cependant, un mouvement continu d'oscillation verticale peut également être présent, ce qui nuit à la qualité du contact thermique entre l'extrémité libre 32 et le substrat 10, et donc au refroidissement de la membrane absorbante 20. Ce mouvement d'oscillation peut conduire également à une dégradation des performances du détecteur thermique 1.

### EXPOSÉ DE L'INVENTION

L'invention a pour objectif de remédier au moins en partie aux inconvénients de l'art antérieur, et plus particulièrement de proposer un détecteur thermique présentant une protection améliorée vis-à-vis des rayonnements électromagnétiques de forte puissance.

Pour cela, l'objet de l'invention est un détecteur thermique adapté à détecter un rayonnement électromagnétique, comportant :
∘ un substrat ;
∘ une membrane absorbante du rayonnement électromagnétique, thermiquement isolée vis-à-vis du substrat, et comportant :
   ▪ une partie fixe dite de détection comportant un transducteur thermométrique,
   ▪ une partie déformable dite de court-circuit thermique,
      - comportant une extrémité fixe assemblée à la partie fixe de détection, et une extrémité libre opposée,
      - adaptée à se déformer sous l'effet d'une variation de température de la membrane absorbante, de sorte que l'extrémité libre de la partie déformable vienne au contact du substrat à une température dite de contact T_{c} de la membrane absorbante.

Selon l'invention, la partie déformable :
▪ comporte un alliage à mémoire de forme présentant une transformation martensitique dite inverse d'une phase martensitique en une phase austénitique dudit alliage entre des températures dites austénitiques initiale Aₛ et finale A_{f}, et une transformation martensitique dite directe de la phase austénitique en la phase martensitique entre des températures dites martensitiques initiale Mₛ et finale M_{f}, la température austénitique finale A_{f} étant supérieure à la température martensitique initiale Mₛ, et
▪ est disposée vis-à-vis du substrat de sorte que l'extrémité libre est au contact du substrat à la température de contact T_{c} supérieure à la température austénitique initiale Aₛ.

Certains aspects préférés mais non limitatifs de ce détecteur thermique sont les suivants.

La partie déformable peut présenter un débattement maximal Δpₘₐₓ entre une première position pᵣ de l'extrémité libre pour une température Tₘ de la membrane absorbante inférieure ou égale à la température martensitique finale M_{f}, et une deuxième position p_{d,max} de l'extrémité libre correspondant à une température Tₘ supérieure ou égale à la température austénitique finale A_{f}. Elle peut alors être positionnée vis-à-vis du substrat de sorte qu'une distance maximale dₘₐₓ séparant l'extrémité libre occupant la première position pᵣ et une surface de contact du substrat sur laquelle l'extrémité libre est au contact à la température de contact T_{c} est inférieure ou égale au débattement maximal Δpₘₐₓ.

L'alliage à mémoire de forme peut être un alliage métallique à base de NiTi.

L'alliage à mémoire de forme peut être un alliage métallique choisi parmi le Ti_{50,5}Ni_{24.5}Pd₂₅, le Ti_{85.3-x}NiₓHf_{14.7} avec x>50%at, et le Ti₇Ni₁₁Zr₄₃Cu₃₉₋ₓCoₓ avec x>10%at.

Le substrat peut présenter une surface de contact sur laquelle l'extrémité libre est au contact à la température de contact T_{c}, et dans lequel l'alliage à mémoire de forme présente une forme de bande longitudinale entre l'extrémité fixe et l'extrémité libre, dont une face orientée vers la surface de contact du substrat présentant des motifs en saillie.

Le substrat peut présenter une face supérieure plane, et peut comporter un plot de contact qui s'étend à partir de la face supérieure et présente une surface de contact sur laquelle l'extrémité libre est au contact à la température de contact T_{c}.

Le substrat peut présenter une face supérieure plane, et la membrane absorbante peut être maintenue au-dessus de la face supérieure du substrat par des bras d'isolation thermique, et par des piliers d'ancrage qui s'étendent de manière sensiblement orthogonale au plan de la face supérieure du substrat.

Le plot de contact peut être réalisé en au moins un matériau thermiquement conducteur identique à celui des piliers d'ancrage.

L'invention porte également sur un procédé de fabrication du détecteur thermique selon l'une quelconque des caractéristiques précédentes, comportant les étapes suivantes :
- fourniture d'un substrat présentant une surface dite de contact ;
- dépôt d'au moins une couche sacrificielle ;
- réalisation de piliers d'ancrage au travers de la couche sacrificielle ;
- réalisation de bras d'isolation thermique et d'une membrane absorbante sur la couche sacrificielle, la membrane absorbante comportant une partie déformable située en regard de la surface de contact ;
- suppression de la couche sacrificielle.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

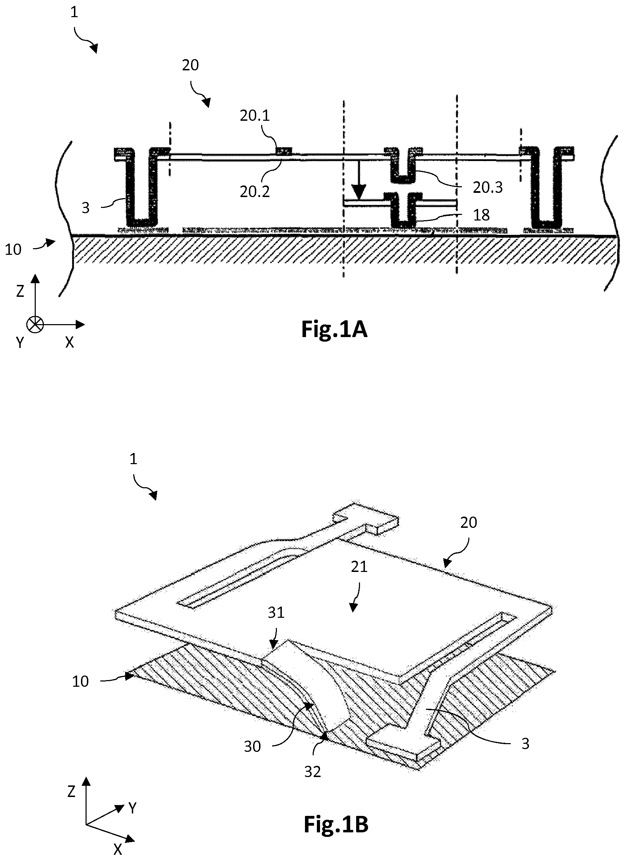

les figures 1A et 1B, déjà décrites, sont des vues schématiques, en coupe (fig.iA) et en perspective (fig.1B), d'un détecteur thermique selon deux exemples de l'art antérieur ;
la figure 2 est un graphe qui illustre l'évolution en température de la fraction volumique χₘ de la phase martensitique au sein d'un alliage à mémoire de forme, ainsi que la déformation d'une partie déformable d'une membrane absorbante ;
les figures 3A à 3C sont des vues schématiques, en perspective (fig.3A) et en coupe (fig.3B et fig.3C), d'un dispositif de détection selon un mode de réalisation ;
les figures 4A à 4C sont des graphes qui illustrent, dans le cas du détecteur thermique de l'art antérieur illustré sur la fig.iB, des exemples :
   - d'une évolution temporelle de la température Tₘ de la membrane absorbante (fig.4A),
   - d'une évolution temporelle de l'espacement d de la partie déformable vis-à-vis du substrat (fig.4B), et
   - d'une évolution en température de l'espacement d de la partie déformable (fig.4C) ;
les figures 5A à 5D sont des graphes qui illustrent, dans le cas du détecteur thermique selon le mode de réalisation illustré sur les fig.3A à 3C, des exemples :
   - d'une évolution temporelle de la température Tₘ de la membrane absorbante (fig.5A),
   - d'une évolution temporelle de l'espacement d de la partie déformable vis-à-vis du substrat (fig.5B), et
   - d'évolutions en température de l'espacement d de la partie déformable (fig.5C et 5D) ;
les figures 6A à 6J illustrent différentes étapes d'un procédé de fabrication du dispositif de détection selon le mode de réalisation illustré sur les fig.3A à 3C ;
les figures 7A à 7D sont des vues schématiques en coupe/de dessus de différents détecteurs thermiques selon des variantes de réalisation.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, l'expression « comportant un » doit être comprise, sauf indication contraire, comme « comportant au moins un » et non pas comme « comportant un unique ».

L'invention porte sur un dispositif de détection d'un rayonnement électromagnétique, par exemple un rayonnement infrarouge ou térahertz. Le dispositif de détection comporte un ou plusieurs détecteurs thermiques de préférence particulièrement adaptés à détecter un rayonnement infrarouge de la gamme LWIR (*Long Wavelength Infrared,* en anglais) dont la longueur d'onde est comprise entre 8µm et 14µm environ. Chaque détecteur thermique comporte avantageusement une cavité interférentielle quart d'onde formée entre une membrane absorbante et un réflecteur, permettant ainsi de maximiser l'absorption du rayonnement infrarouge à détecter par la membrane absorbante.

Comme décrit en détail plus loin, le détecteur thermique comporte une membrane absorbante suspendue au-dessus d'un substrat par des piliers d'ancrage et thermiquement isolée de celui-ci par des bras d'isolation thermique. La membrane absorbante comporte une partie fixe de détection comportant le transducteur thermométrique, et une partie déformable de court-circuit thermique, laquelle comporte une extrémité libre destinée à être au contact du substrat lorsque la membrane absorbante atteint une température dite de contact T_{c} inférieure à une température de protection Tₜₕ prédéterminée. Le contact entre la partie déformable et le substrat permet de refroidir la membrane absorbante, et donc d'éviter que la température Tₘ de cette dernière n'atteigne voire ne dépasse la température de protection Tₜₕ du transducteur thermométrique. Dans la suite de la description, la température Tₘ la membrane absorbante est une température moyenne des différentes parties de la membrane absorbante. Elle est supposée homogène, au premier ordre, au sein de la membrane absorbante, c'est-à-dire tant dans la partie fixe de détection que dans la partie déformable de court-circuit thermique.

La partie déformable de court-circuit thermique est réalisée en au moins un alliage à mémoire de forme (SMA, pour *Shape Memory Alloy,* en anglais), c'est-à-dire en un alliage présentant une transformation martensitique. De manière connue, et comme décrit notamment dans l'article de Choudhary et Kaur intitulé Shape memory alloy thin films and heterostructures for MEMS applications: A review, Sensors and Actuators A 242 (2016) 162-181, une transformation martensitique est une transition structurale de l'alliage, réversible et de type displacive, en fonction de la température, entre une phase martensitique (phase cristallographique à basse température) et une phase austénitique (phase cristallographique à haute température). La transformation martensitique présente des températures caractéristiques (à contrainte nulle) qui dépendent du sens de la transformation. Ainsi, pour la transformation directe (austénite en martensite), les températures de début et de fin de transformation sont conventionnellement notées M*ₛ* (pour *Martensite start temperature,* en anglais) et M_{f} (pour *Martensite finish temperature*). Pour la transformation inverse (martensite en austénite), les températures de début et de fin de transformation sont conventionnellement notées A*ₛ* (pour *Austenite start temperature*) et A_{f} (pour *Austenite finish temperature*). De manière connue également, la transformation martensitique présente une hystérésis en température entre le refroidissement et l'échauffement de l'alliage, dans la mesure où les températures M*ₛ* et A_{f} sont différentes l'une de l'autre, tout comme le sont les températures M_{f} et A*ₛ*. On note χₘ la fraction volumique de la phase martensitique au sein de l'alliage à mémoire de forme.

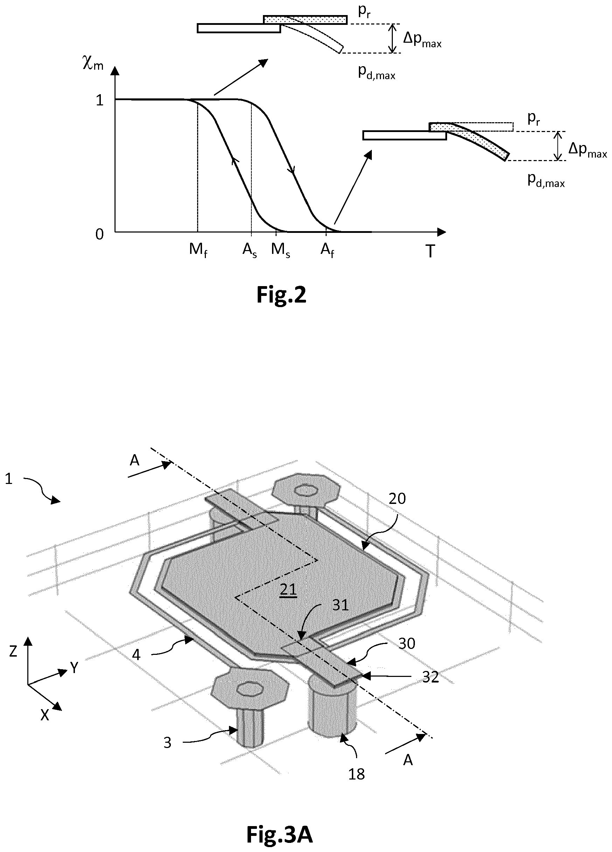

En référence à la figure 2, lors d'une transformation martensitique inverse (de martensite à austénite), la fraction volumique χₘ de la phase martensitique est initialement supérieure ou égale à 0.95, voire égale à 1.0, lorsque la température T de l'alliage à mémoire de forme est inférieure ou égale à la température A*ₛ*. Elle diminue ensuite à mesure qu'augmente la température T, et est inférieure ou égale à 0.05, voire égale à o, lorsque la température T est supérieure ou égale à la température A_{f}. De même, lors de la transformation martensitique directe (de austénite à martensite), la fraction volumique χₘ de la phase martensitique est initialement inférieure ou égale à 0.05, voire égale à o, lorsque la température T de l'alliage à mémoire de forme est supérieure ou égale à la température M*ₛ*. Elle augmente ensuite à mesure que diminue la température T et est supérieure ou égale à 0.95, voire égale à 1.0, lorsque la température T est inférieure ou égale à la température M_{f}.

Autrement dit, la partie déformable présente une première configuration de repos dans laquelle l'extrémité libre présente une première position pᵣ. Dans cette configuration, la partie déformable n'est sensiblement pas déformée, et la température T de la partie déformable est alors inférieure ou égale à la température A*ₛ* dans le cas d'une transformation martensitique inverse (de martensite à austénite), ou est inférieure ou égale à la température M_{f} dans le cas d'une transformation martensitique directe (de austénite à martensite). Par ailleurs, la partie déformable, lorsqu'elle ne présente pas la configuration non déformée de repos, occupe une configuration déformée dans laquelle l'extrémité libre présente au moins une deuxième position p_{d} différente de la position pᵣ. Dans cette configuration, la partie déformable est déformée en direction du substrat, et la température de la partie déformable est alors supérieure à la température A*ₛ* dans le cas d'une transformation martensitique inverse (de martensite à austénite), ou est supérieure à la température M_{f} dans le cas d'une transformation martensitique directe (de austénite à martensite).

On note Δpₘₐₓ le débattement maximal de la partie déformable défini entre une première position pᵣ de l'extrémité libre dans la configuration de repos de la partie déformable, et une deuxième position p_{d,max} de l'extrémité libre dans la configuration déformée lorsque la température T est supérieure ou égale à la température A_{f}. Les positions pᵣ et p_{d},ₘₐₓ sont définies suivant un axe Z orthogonal au plan du substrat. Dans la configuration de repos, c'est-à-dire en l'absence d'un échauffement excessif de la membrane absorbante, l'extrémité libre de la partie déformable est alors espacée du substrat d'une valeur maximale dₘₐₓ inférieure ou égale au débattement maximal Δpₘₐₓ.

Dans le cadre de l'invention, l'alliage à mémoire de forme de la partie déformable présente une température austénitique initiale A*ₛ* à partir de laquelle son extrémité libre se déforme pour venir au contact du substrat. Autrement dit, l'extrémité libre vient au contact du substrat à une température de contact T_{c} supérieure à la température austénitique initiale A*ₛ*. La température de contact T_{c} peut être, indifféremment, inférieure, égale ou supérieure à la température austénitique finale A_{f}.

De plus, l'alliage à mémoire de forme est avantageusement adapté de manière à présenter une constante de temps dynamique Δt_{dyn} associée à la déformation de la partie déformable en réponse au refroidissement supérieure à la constante de temps thermique Δtₜₕ associée à son refroidissement lorsque l'extrémité libre est au contact du substrat. Autrement dit, comme détaillé plus loin, le refroidissement lors du contact de la partie déformable avec le substrat provoque une diminution brutale de la température de l'alliage à mémoire de forme avec la constante de temps thermique Δtₜₕ. L'alliage à mémoire de forme se déforme alors, en réponse à cette phase de refroidissement, avec la constante de temps dynamique Δt_{dyn}. Dans la mesure où Δt_{dyn} est supérieure à Δtₜₕ, l'alliage à mémoire de forme se refroidit jusqu'à au moins la température M_{f}.

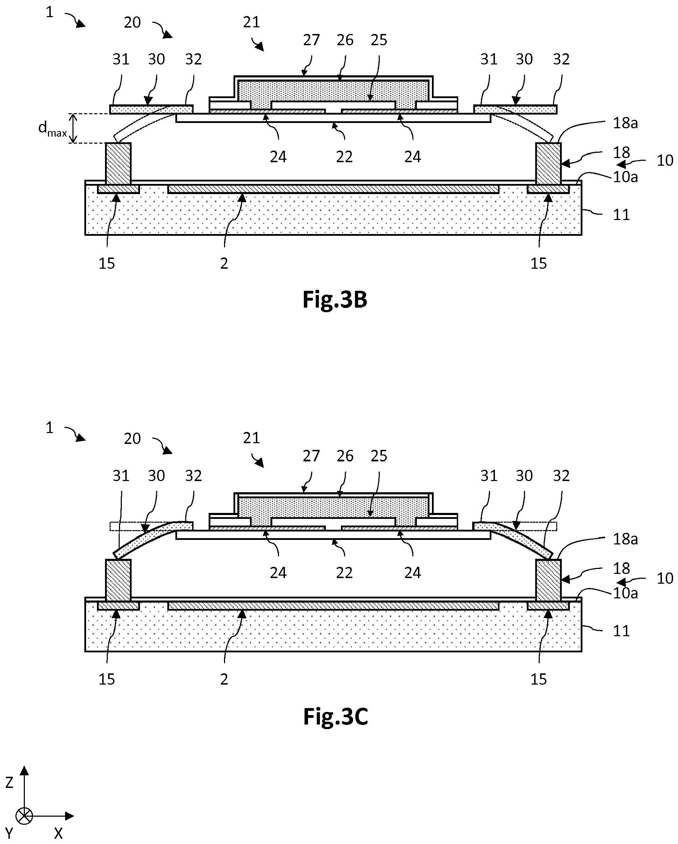

Les figures 3A à 3C sont des vues schématiques, en perspective (fig.3A), et en coupe suivant le plan A-A (fig.3B et 3C), d'un dispositif de détection selon un mode de réalisation. Un seul détecteur thermique 1 est ici représenté, mais le dispositif de détection comporte avantageusement une matrice de détecteurs thermiques identiques (pixels sensibles).

On définit ici et pour la suite de la description un repère direct tridimensionnel orthogonal (X,Y,Z), où le plan (X,Y) est sensiblement parallèle au plan principal du substrat de lecture du détecteur thermique 1, et où l'axe Z est orienté suivant une direction sensiblement orthogonale au plan principal du substrat de lecture et orientée vers la membrane absorbante 20. Dans la suite de la description, les termes « inférieur » et « supérieur » s'entendent comme étant relatifs à un positionnement croissant lorsqu'on s'éloigne du substrat de lecture suivant la direction +Z.

Le détecteur thermique 1 comporte un substrat 10 avantageusement fonctionnalisé, dit substrat de lecture, réalisé dans cet exemple à base de silicium, comportant un circuit de lecture permettant la commande et la lecture des détecteurs thermiques. Le circuit de lecture se présente ici sous la forme d'un circuit intégré CMOS situé dans un substrat support 11. Il comporte des portions de lignes conductrices, par exemple métalliques, séparées les unes des autres par un matériau diélectrique, par exemple un matériau minéral à base de silicium tel qu'un oxyde de silicium SiOₓ, un nitrure de silicium SiNₓ, ou leurs alliages. Il peut également comporter des éléments électroniques actifs (non représentés), par exemple des diodes, transistors, ou des éléments électroniques passifs, par exemple des condensateurs, résistances..., connectés par des interconnexions électriques au détecteur thermique 1 d'une part, et à un plot de connexion (non représenté) d'autre part, ce dernier étant destiné à connecter le dispositif de détection 1 à un dispositif électronique externe. A titre illustratif, les portions conductrices et les vias conducteurs peuvent être réalisés, par exemple, en cuivre, en aluminium ou en tungstène. Le cuivre ou le tungstène peut éventuellement être situé entre des sous-couches en nitrure de titane, de tantale ou autre. Le substrat de lecture 10 présente ici une face supérieure formée notamment par une surface d'une couche isolante inter-métal et une surface de portions conductrices du dernier niveau d'interconnexion électrique. Le substrat 10, d'une manière générale, est un empilement. Cet empilement 10 comporte le substrat support 11, et avantageusement le réflecteur 2 et la couche de protection 17. Il peut également comporter un plot de contact 18, comme décrit en détail plus loin, auquel cas le plot de contact 18 est en contact thermique avec le substrat support 11. Quoi qu'il en soit, la partie déformable 30 est destinée à venir au contact de l'empilement 10, par exemple au contact du plot de contact 18 de l'empilement 10.

Le détecteur thermique 1 comporte un réflecteur 2, réalisée au moins un matériau réfléchissant vis-à-vis du rayonnement électromagnétique à détecter. Il est ici avantageusement formé d'une portion de la ligne conductrice du dernier niveau d'interconnexion électrique du circuit intégré CMOS. De plus, le substrat comporte ici deux plots de contact 18, qui reposent sur des portions conductrices 15 du dernier niveau d'interconnexion électrique, et sont destinés à former une surface de contact 18a pour les parties déformables 30 de la membrane absorbante 20. Ces plots de contact 18 s'étendent suivant l'axe Z à partir de la face supérieure 10a du substrat 10, et sont réalisés en au moins un matériau thermiquement conducteur, par exemple un matériau métallique, de sorte que le substrat support 11 et les plots de contact 18 présentent une température sensiblement identique. Chaque plot de contact 18 est destiné à être situé en regard, c'est-à-dire à la perpendiculaire d'une partie déformable 30, de sorte que l'extrémité libre 32 de celle-ci puisse venir au contact du plot de contact 18. Ainsi, le substrat 10 (ou empilement 10) comporte une face supérieure 10a ainsi qu'une surface de contact 18a. Aussi, lorsqu'il y a contact entre l'extrémité libre 32 de la partie déformable 30 et le substrat 10, il y a contact au niveau de la face supérieure 10a ou de la surface de contact 18a.

La face supérieure 10a est avantageusement revêtue d'une couche de protection 17, notamment lorsque le détecteur thermique 1 est réalisé via l'utilisation de couches sacrificielles minérales éliminées ensuite par attaque chimique en milieu acide HF (acide fluorhydrique). La couche de protection 17 présente alors une fonction d'arrêt de gravure, et est donc adaptée à assurer une protection du substrat support 11 et des couches diélectriques inter-métal lorsqu'elles sont réalisées en un matériau minéral vis-à-vis de l'attaque chimique HF. Cette couche de protection 17 forme ainsi une couche hermétique et chimiquement inerte. Elle est électriquement isolante pour éviter tout court-circuit entre les portions de ligne métallique. Elle peut ainsi être réalisée en alumine Al₂O₃, voire en nitrure ou fluorure d'aluminium, voire en silicium amorphe intrinsèque. Elle peut présenter une épaisseur comprise entre quelques dizaines et quelques centaines de nanomètres, par exemple comprise entre 10nm et 500nm, de préférence comprise entre 20nm et 100nm.

Le détecteur thermique 1 peut présenter des dimensions latérales dans le plan XY (dites pas pixel), de l'ordre d'une à quelques dizaines de microns, par exemple égale à 10µm environ voire moins. Il comporte une membrane absorbante 20 du rayonnement électromagnétique, suspendue au-dessus du substrat de lecture 10 par des piliers d'ancrage 3 et connectée au circuit de lecture par ces derniers. Elle est de plus isolée thermiquement vis-à-vis du substrat de lecture par des bras d'isolation thermique 4 qui s'étendent entre les piliers d'ancrage et la membrane absorbante 20.

Les piliers d'ancrage 3 sont des plots conducteurs réalisés en au moins un matériau électriquement conducteur, qui s'étendent suivant l'axe Z à partir du substrat de lecture 10 jusqu'à la membrane absorbante 20. Ils sont au contact des portions de lignes conductrices, et assurent ainsi la connexion électrique de la membrane absorbante 20 au circuit de lecture. Les piliers d'ancrage 3 peuvent être réalisés, par exemple, en cuivre, en aluminium ou en tungstène, éventuellement encapsulé dans au moins une sous-couche de protection en nitrure de titane, ou autre. Les bras d'isolation thermique 4 s'étendent ici de manière sensiblement coplanaire à la membrane absorbante 20, et sont ici formés d'une couche électriquement conductrice permettant la connexion électrique de la membrane absorbante 20 au circuit de lecture, avantageusement encapsulée dans deux couches diélectriques inférieure et supérieure qui participent à assurer la rigidification des bras d'isolation thermique 4.

La membrane absorbante 20 comporte une partie de détection 21 et une partie déformable 30 de court-circuit thermique. La partie de détection 21 est dite fixe dans la mesure où elle est située à une distance sensiblement constante vis-à-vis du substrat 10. Elle comporte un absorbeur formé ici par les électrodes de polarisation 24 et un transducteur thermométrique. D'une manière générale, un transducteur thermométrique est un élément présentant une propriété électrique variant avec son échauffement, et peut être comme ici un matériau thermistance 26 formé par exemple d'oxyde de vanadium ou de titane, ou de silicium amorphe, ou en variante peut être une capacité formée par un matériau pyroélectrique ou ferroélectrique, une diode (jonction pn ou pin), voire un transistor à effet de champ et à structure métal - oxyde - semiconducteur (MOSFET).

La partie de détection 21 de la membrane absorbante 20 est espacée du substrat de lecture 10, et en particulier du réflecteur 2, d'une distance non nulle. Cette distance est de préférence ajustée de manière à former une cavité interférentielle quart d'onde optimisant l'absorption du rayonnement électromagnétique à détecter par la membrane absorbante 20. La membrane absorbante 20 est espacée du substrat de lecture 10, et plus précisément du réflecteur 2, d'une distance typiquement comprise entre 1µm et 5µm, de préférence 2µm, lorsque le détecteur thermique 1 est conçu pour la détection d'un rayonnement infrarouge compris dans le LWIR.

La membrane absorbante 20 est ici classiquement formée, dans la partie de détection 21, d'un empilement d'une couche diélectrique inférieure 22 réalisée en un matériau diélectrique, de deux électrodes 24 électriquement isolées l'une de l'autre par un espacement latéral, d'une couche isolante intermédiaire 25 réalisée en un matériau diélectrique et recouvrant les électrodes 24 et l'espacement latéral, hormis en deux ouvertures débouchant sur les électrodes, d'un matériau thermistance 26 tel que du silicium amorphe ou un oxyde de vanadium ou de titane. Le matériau thermistance 26 est au contact des deux électrodes de polarisation 24 via les ouvertures. Une couche supérieure de protection 27 recouvre le matériau thermistance 26, notamment pour protéger le matériau thermistance 26 lors de l'attaque chimique à l'acide fluorhydrique mise en œuvre ultérieurement. L'absorbeur est ici formé par les électrodes de polarisation 24, lesquelles sont réalisées en au moins un matériau métallique, par exemple en nitrure de titane.

La membrane absorbante 20 comporte en outre une partie déformable 30 permettant d'assurer un court-circuit thermique entre la membrane absorbante 20 et le substrat 10 avant que la température Tₘ de la membrane absorbante 20 n'atteigne ou ne dépasse la température prédéterminée de protection Tₜₕ du matériau thermistance 26. La partie déformable 30 est ici réalisée en une bande présentant deux extrémités longitudinales opposées : une première extrémité fixe 31 assemblée à la partie de détection 21, et une deuxième extrémité 32 dite libre, c'est-à-dire pouvant se déplacer suivant l'axe Z. Par bande, on entend une portion de matière présentant une surface définie par une longueur supérieure à sa largeur et une épaisseur inférieure à la largeur. Par ailleurs, comme indiqué précédemment, on considère que la température au sein de la membrane absorbante 20, c'est-à-dire au sein des parties de détection et de court-circuit thermique, est homogène au premier ordre.

En référence à la fig.3B, la partie déformable 30 est adaptée à présenter la première configuration dite de repos pour laquelle la température Tₘ de la membrane absorbante 20 est notamment égale à une température nominale Tₙ lorsque le détecteur thermique 1 n'est pas soumis au rayonnement électromagnétique de forte puissance. L'extrémité libre 32 occupe alors la première position pᵣ et son espacement d (ici l'espacement maximal dₘₐₓ) avec la surface supérieure 18a du plot de contact 18 est inférieur ou égal au débattement maximal Δpₘₐₓ.

En référence à la fig.3C, la partie déformable 30 est également adaptée à présenter une deuxième configuration dite de court-circuit thermique dans laquelle l'extrémité libre 32 est au contact du substrat 10, et ici de la surface supérieure 18a du plot de contact 18. La température Tₘ de la membrane absorbante 20 correspond alors à la température de contact T_{c} à l'instant du contact mécanique avec le substrat 10, puis diminue dans une phase de refroidissement. L'extrémité libre 32 occupe alors une position p_{c} et son espacement d avec la surface supérieure 18a du plot de contact 18 est nul.

La partie déformable 30 est réalisée en au moins un alliage à mémoire de forme. Plus précisément, l'alliage à mémoire de forme est un alliage métallique choisi parmi les alliages à base de NiTi, à base de cuivre Cu, ou à base de fer Fe. L'alliage métallique est choisi de sorte que la température austénitique finale A_{f} est inférieure ou égale à la température prédéterminée Tₜₕ de protection du transducteur thermométrique. Cette température de protection dépend du type de transducteur thermométrique, et peut être de l'ordre de 100°C à 350°C, par exemple à 200°C. Ainsi, l'alliage métallique peut être réalisé en un composé binaire NiTi avec une proportion atomique de nickel et de titane égale ou non, ou en un composé ternaire NiTiA où l'élément chimique additionnel A peut être du fer Fe, du cuivre Cu, du zirconium Zr, de l'hafnium Hf, du platine Pt, du palladium Pd, du tungstène W, de l'or Au, ou autre. Il peut ainsi s'agir du Ti₅₁Ni₃₈Cu₁₁ où les indices représentent la proportion atomique de chaque élément chimique au sein de l'alliage. L'épaisseur de l'alliage en mémoire de forme peut être comprise entre quelques dizaines de nanomètres à quelques centaines de nanomètres, par exemple 100nm. La bande de la partie déformable 30 peut présenter une longueur de plusieurs microns, par exemple égale entre 1 et 2µm et une largeur égale à quelques centaines de nanomètres ou quelques microns, par exemple égale entre 50nm et 2µm. La partie déformable peut ainsi être une bande formée continûment en au moins un matériau à base d'un alliage à mémoire de forme, ou être formée de nanofils à base d'alliage à mémoire de forme, ayant par exemple une largeur de quelques dizaines de nanomètres, par exemple 50nm. Dans ce cas, une partie déformable à nanofils permet de réduire davantage la capacité calorifique de la membrane absorbante et d'obtenir un débattement maximal Δpₘₐₓ plus important.

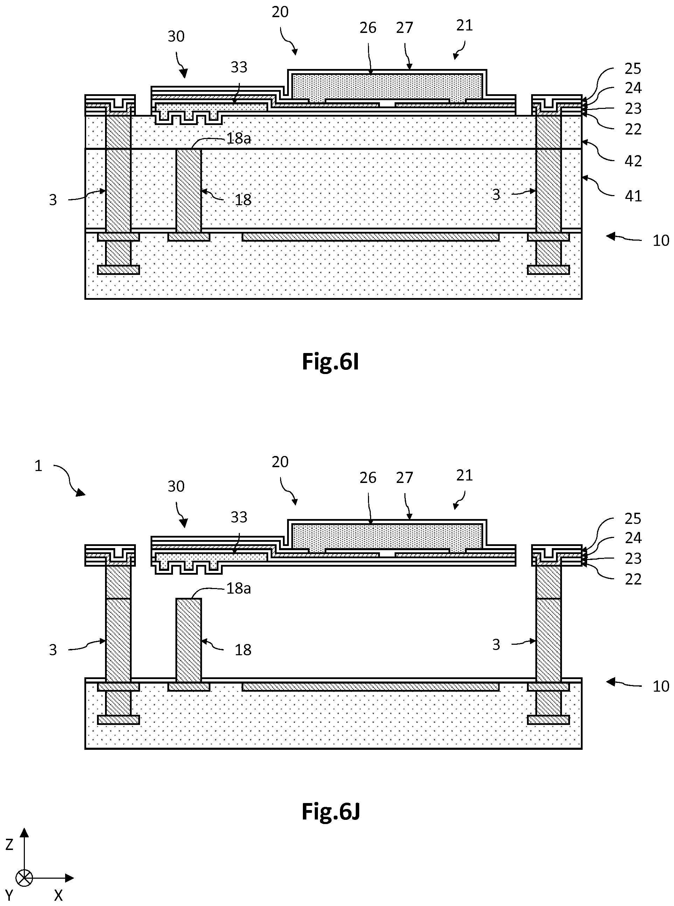

L'alliage à mémoire de forme de la partie déformable 30 comporte avantageusement une pluralité de motifs en saillie (cf. fig.6J) et orientés vers la surface de contact 18a du substrat 10. Ces motifs sont des protubérances qui s'étendent de manière orthogonale à la bande que forme la partie déformable 30. Elles permettent d'obtenir de manière quasi systématiquement une déformation de la partie déformable 30 en direction de la surface de contact. Ces motifs en saillie peuvent présenter une hauteur par exemple de l'ordre de quelques dizaines nanomètres.

La partie déformable 30 est positionnée vis-à-vis de la surface de contact 18a du substrat 10 (ici la surface supérieure du plot de contact 18) de sorte qu'elle se déforme à partir de la température austénitique initiale A*ₛ* et touche la surface de contact 18a à la température de contact T_{c}, celle-ci étant indifféremment inférieure, égale, ou supérieure à la température austénitique finale A_{f}. Aussi, le contact entre l'extrémité libre 32 de la partie déformable 30 et la surface de contact 18a du substrat 10 se traduit par un refroidissement de la membrane absorbante 20 et donc une diminution de la température Tₘ. Cependant, du fait de l'hystérésis en température de la transformation martensitique, ici directe, l'extrémité libre 32 de la partie déformable 30 reste au contact de la surface de contact 18a du substrat 10 tant que la température Tₘ reste supérieure à la température martensitique initiale M*ₛ*.

De manière avantageuse, et comme décrit en détail plus loin, elle peut également rester momentanément au contact de la surface de contact 18a du substrat 10 pour une température inférieure à la température M*ₛ* du fait d'une inertie non nulle de la réponse dynamique en déformation de l'alliage à mémoire de forme. Pour cela, l'alliage à mémoire de forme de la partie déformable présente avantageusement une faible hystérésis, c'est-à-dire une faible différence entre les températures M*ₛ* et A_{f}, par exemple inférieure ou égale à 20°C. L'alliage à mémoire de forme est alors de préférence choisi parmi les alliages à base de TiNiPd, TiNiCuAlMn, TiNiMn). Lorsque la température Tₘ devient inférieure ou égale à M*ₛ*, il y a perte de contact entre l'extrémité libre 32 et la surface de contact 18a du substrat 10. La partie déformable 30 quitte la configuration de court-circuit et tend vers sa configuration de repos.

Dans cet exemple, la surface de contact 18a du substrat 10 est la surface supérieure des plots de contact 18 situés chacun en regard d'une partie déformable 30. Elle peut également être une zone de la couche de protection 17 le cas échéant, ou une zone de la face supérieure 10a du substrat 10. Quoi qu'il en soit, l'espacement maximal dₘₐₓ entre l'extrémité libre 32 dans la configuration de repos et la surface de contact 18a du substrat 10 est choisi de manière à être inférieur ou égal au débattement maximal Δpₘₐₓ de l'alliage à mémoire de forme. Ainsi, le dimensionnement vertical du plot de contact 18 permet de s'assurer que le contact mécanique et donc thermique entre l'extrémité libre 32 de la partie déformable 30 sur le plot de contact 18 est effectivement effectué à une température de contact T_{c} supérieure à la température austénitique initiale A*ₛ*.

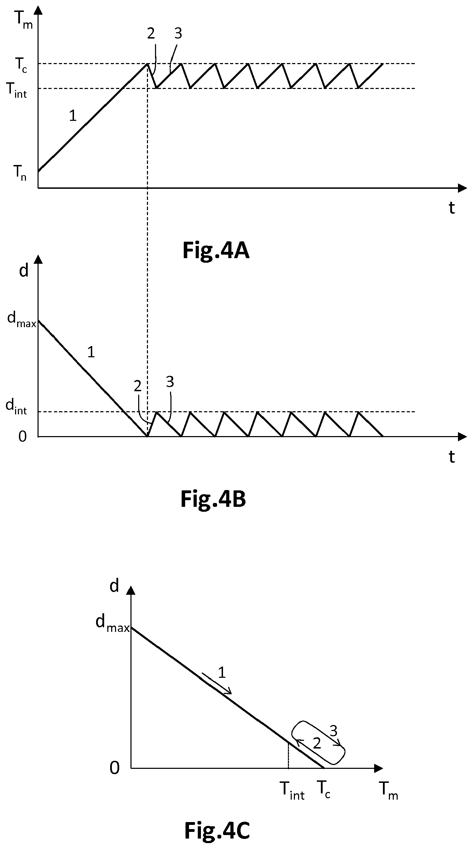

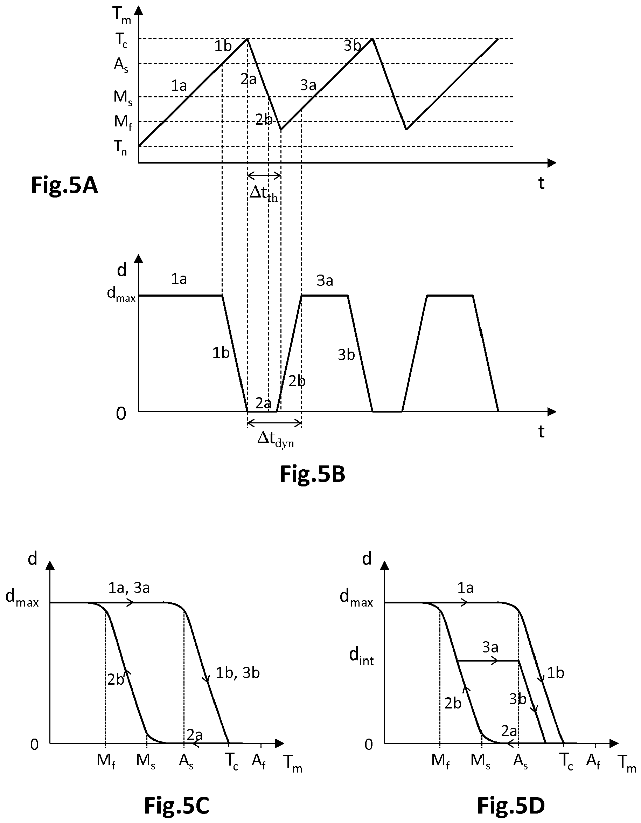

Le fonctionnement du dispositif de détection est maintenant décrit en référence aux figures 5A-5D, par opposition aux figures 4A-4C qui illustrent un fonctionnement d'un dispositif de détection selon l'exemple de la fig.iB de l'art antérieur mentionné précédemment.

En référence aux figures 4A à 4C, il apparaît qu'un détecteur thermique 1 selon l'art antérieur décrit précédemment dont la partie déformable 30 est de type bilame présente un mouvement continu d'oscillation verticale à cause de l'alternance des phases de refroidissement au contact du substrat et de réchauffement après perte du contact. Ce mouvement continu d'oscillation verticale se caractérise notamment par des contacts mécaniques de courte durée entre l'extrémité libre 32 et la surface de contact 18a du substrat 10, ainsi que par une faible amplitude d'oscillation.

Avant que le détecteur thermique 1 ne soit soumis à un rayonnement électromagnétique de forte puissance, la température Tₘ est sensiblement égale à la température nominale Tₙ. Ensuite, une phase 1 d'échauffement de la membrane absorbante 20 a lieu à partir du moment où elle est soumise au rayonnement électromagnétique de forte puissance. La température Tₘ augmente continûment (augmentation ici rectiligne de manière purement illustrative), et la partie déformable 30 se déforme alors en conséquence, de sorte que l'espacement d entre l'extrémité libre 32 et le substrat 10 diminue continûment à partir de la valeur d'espacement maximal dₘₐₓ, jusqu'à une valeur nulle. Lors du contact mécanique entre l'extrémité libre 32 et la surface de contact 18a du substrat 10, l'espacement d est alors nul et la température Tₘ correspond à la température de contact T_{c}.

Lorsque la partie déformable 30 est au contact du substrat, a ensuite lieu une phase 2 de refroidissement de la membrane absorbante 20, qui se traduit par une diminution de la température Tₘ de la membrane absorbante 20 et en conséquence, une perte de contact de l'extrémité libre 32 vis-à-vis du substrat et une augmentation de l'espacement d.

Cependant, le détecteur thermique 1 étant toujours soumis au rayonnement électromagnétique de forte puissance, et le contact thermique avec le substrat étant rompu, la température Tₘ de la membrane augmente à nouveau. Cette nouvelle phase d'échauffement est alors notée « 3 » sur les figures. La température Tₘ de la membrane absorbante 20 augmente alors et en conséquence, l'extrémité libre 32 de la partie déformable 30 redescend, à partir d'une distance dᵢₙₜ, jusqu'à venir à nouveau au contact du substrat (d=0).

Il apparaît alors que se met en place un mouvement continu d'oscillation verticale de la partie déformable 30 correspondant à l'alternance entre les phases de contact et de refroidissement 2 et les phases de perte de contact et d'échauffement 3. Ce mouvement continu d'oscillation verticale est de faible amplitude puisque la variation de l'espacement d est directement liée à la variation de température. Aussi, la température Tₘ de la membrane absorbante 20 reste maintenue à une température moyenne élevée comprise entre une température intermédiaire Tᵢₙₜ et la température de contact T_{c}. Il en ressort que ce mouvement continu d'oscillation verticale peut être préjudiciable vis-à-vis des propriétés de la partie déformable 30 et donc vis-à-vis de celle de la membrane absorbante 20, et peut entraîner un vieillissement accéléré de la membrane absorbante 20. De plus, la qualité du contact thermique entre la partie déformable 30 et le substrat est faible dans la mesure où les contacts mécaniques sont de très courte durée. Par ailleurs, cela peut se traduire par une inhomogénéité de la gestion thermique des différents détecteurs thermiques au sein d'une même matrice de pixels sensibles. Ces différents aspects peuvent conduire à une dégradation des performances du dispositif de détection.

En référence aux figures 5A à 5C, il apparaît que le détecteur thermique 1 dont la membrane absorbante 20 comporte une partie déformable 30 à alliage à mémoire de forme ne présente pas un tel mouvement continu d'oscillation verticale. Le contact mécanique entre la partie déformable 30 et le substrat est de plus grande durée et l'amplitude du mouvement vertical de la partie déformable 30 est plus importante, améliorant ainsi la qualité du contact thermique et donc du refroidissement de la membrane absorbante 20, ce qui contribue à préserver les performances du dispositif de détection.

Comme indiqué précédemment, la température Tₘ de la membrane absorbante 20 présente initialement une température nominale Tₙ en l'absence du rayonnement électromagnétique de forte puissance. Lorsque ce rayonnement est présent (phase 1 d'échauffement), la température Tₘ de la membrane absorbante 20 augmente continûment. Tant qu'elle est inférieure à la température austénitique initiale A*ₛ*, la partie déformable 30 ne se déforme pas et l'espacement d reste égal à la valeur maximale dₘₐₓ : il s'agit de la partie 1a. Lorsque la température Tₘ atteint et dépasse la température A*ₛ*, l'alliage à mémoire de forme passe progressivement de la phase martensitique à la phase austénitique, et se déforme en conséquence à mesure que la température Tₘ augmente, se traduisant par une diminution progressive de l'espacement d : partie 1b. La température Tₘ augmente (et l'espacement d diminue) jusqu'à ce que l'extrémité libre 32 touche le substrat. A cet instant, l'espacement d est alors nul et la température Tₘ correspond à la température de contact T_{c}. La température T_{c} est ici inférieure à la température A_{f} mais en variante, elle pourrait être supérieure ou égale à A_{f}.

Du fait de l'hystérésis en température, le refroidissement (phase 2) de la membrane absorbante 20 du fait du contact thermique entre la partie déformable 30 et le substrat ne se traduit pas immédiatement par une perte du contact mécanique. En effet, la phase 2 de refroidissement comporte une première partie 2a dans laquelle la température Tₘ de la partie déformable 30 diminue sans se déformer jusqu'à atteindre la température martensitique initiale M*ₛ*. Cette hystérésis en température de la transformation martensitique directe (phase austénitique en phase martensitique) permet de garder l'extrémité libre 32 au contact du substrat sur une durée plus longue que dans l'exemple de l'art antérieur. Ensuite, lors d'une deuxième partie 2b de la phase 2 de refroidissement, l'alliage à mémoire de forme se refroidit jusqu'à atteindre, dans cet exemple, la température martensitique finale M_{f} dans la mesure où la constante de temps dynamique Δt_{dyn} est supérieure à la constante de temps thermique Δtₜₕ. Comme indiqué sur les figures 5A et 5B, la constante de temps thermique Δtₜₕ correspond à la durée nécessaire pour que l'alliage à mémoire de forme passe de la température de contact T_{c} à une température minimale (ici légèrement inférieure à la martensitique finale M_{f}) du fait du refroidissement de la membrane absorbante 20. De plus, la constante de temps dynamique Δt_{dyn} correspond à la durée nécessaire pour que l'alliage à mémoire de forme passe d'un espacement nul à l'espacement maximal dₘₐₓ, du fait du refroidissement de la membrane absorbante 20.

Cependant, le détecteur thermique 1 étant toujours soumis au rayonnement électromagnétique de forte puissance, et le contact thermique avec le substrat étant rompu, la température Tₘ de la membrane augmente à nouveau. Lors de cette nouvelle phase 3 d'échauffement, la partie déformable 30 ne se déforme pas immédiatement comme dans l'exemple de l'art antérieur. En effet, du fait de l'hystérésis en température de la transformation martensitique inverse (martensite vers austénite), cette phase 3 présente une partie 3a dans laquelle l'espacement d reste constant à la valeur maximale dₘₐₓ tant que la température Tₘ n'a pas atteint la température austénitique initiale A*ₛ*. Ensuite, dans une partie 3b, la température Tₘ continue d'augmenter et l'espacement d diminue jusqu'au contact thermique entre l'extrémité libre 32 et le substrat, à une température T_{c}, ici inférieure à la température A_{f} (mais pourrait être supérieure ou égale à A_{f}).

La figure 5D illustre une variante dans laquelle la constante de temps thermique Δtₜₕ est supérieure à la constante de temps dynamique At_{dyn}. Aussi, lors du refroidissement (phase 2b), la température Tₘ diminue mais n'atteint pas la température M_{f} à cause de l'échauffement lié au rayonnement électromagnétique de forte puissance. Ici encore, du fait de l'hystérésis en température de la transformation martensitique inverse, la phase d'échauffement comporte une partie 3a dans laquelle l'espacement d reste constant à une valeur intermédiaire dᵢₙₜ tant que la température Tₘ n'a pas atteint la température austénitique initiale A*ₛ*. Ensuite, dans une partie 3b, la température Tₘ continue d'augmenter et l'espacement d diminue de dᵢₙₜ jusqu'au contact thermique entre l'extrémité libre 32 et le substrat (d=0) à la température T_{c}.

Aussi, il en ressort que l'hystérésis en température de la transformation martensitique directe de l'alliage à mémoire de forme (de la phase austénitique vers la phase martensitique) permet d'améliorer la qualité du contact mécanique et donc thermique entre la partie déformable 30 et le substrat. En effet, l'extrémité libre 32 reste au contact du substrat sur une durée plus longue, ce qui améliore le refroidissement de la membrane absorbante 20. De plus, l'hystérésis de la transformation martensitique (directe et inverse) permet d'éviter que se mette en place un mouvement continu d'oscillation verticale avec contacts mécaniques de courte durée entre la partie déformable 30 et le substrat. Les risques de dégradation des propriétés de la membrane absorbante 20 sont alors réduits. On augmente ainsi la fiabilité et l'homogénéité de la gestion thermique des différents détecteurs thermiques au sein d'une même matrice de pixels sensibles. Les performances du dispositif de détection sont alors améliorées.

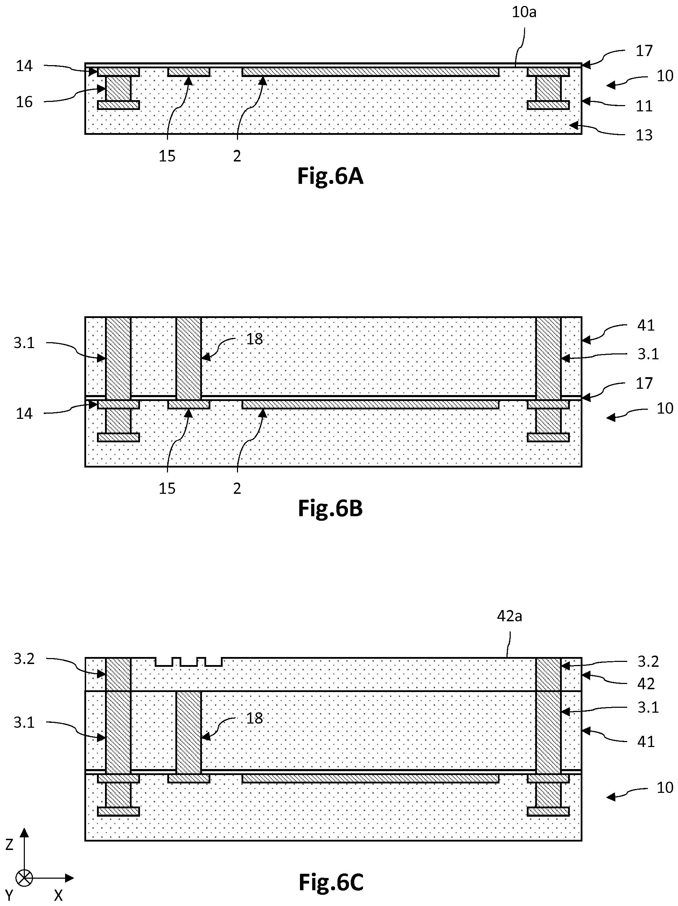

Les figures 6A à 6J illustrent différentes étapes d'un procédé de fabrication d'un détecteur thermique 1 selon un mode de réalisation. Dans cet exemple, le détecteur thermique 1 est réalisé en utilisant des couches sacrificielles minérales destinées à être ultérieurement supprimées par gravure humide en milieu acide (HF vapeur). En variante, les couches sacrificielles peuvent être réalisées à base de polyimide ou équivalent et être ultérieurement supprimées par gravure sèche par exemple sous plasma O₂. Dans ce cas, les matériaux des différentes couches de protection sont adaptés à être inertes à ce type de gravure sèche, et peuvent être choisis parmi l'AlN, le Al₂O₃, le carbone amorphe, le silicium amorphe, entre autres.

En référence à la fig.6A, on réalise le substrat de lecture 10, formé d'un substrat support 11 contenant le circuit de lecture adapté à commander et lire le détecteur thermique 1. Le circuit de lecture comporte ainsi des portions conductrices 14 qui affleurent la face supérieure 10a du substrat de lecture 10, laquelle est sensiblement plane. Les portions conductrices 14 et les vias conducteurs 16 peuvent être réalisés en cuivre, en aluminium et/ou en tungstène, entre autres, par exemple au moyen d'un procédé damascène dans lequel on remplit des tranchées réalisées dans la couche isolante inter-métal. L'affleurement des portions conductrices 16 au niveau de la face supérieure peut être obtenu par une technique de planarisation mécano-chimique (CMP).

On réalise également le réflecteur 2 du détecteur thermique 1. Le réflecteur 2 est ici formé par une portion d'une ligne conductrice du dernier niveau d'interconnexion, celle-ci étant réalisée en un matériau métallique adapté à réfléchir le rayonnement électromagnétique à détecter. Il est destiné à s'étendre en regard de la membrane absorbante, et est destiné à former avec l'absorbeur une cavité interférentielle quart d'onde vis-à-vis du rayonnement électromagnétique à détecter.

On peut également réaliser une portion conductrice 15 destinée à assurer un appui et une meilleure thermalisation d'un plot de contact du substrat 10. Ce plot de contact est destiné à assurer le contact thermique entre le substrat 10 et la partie déformable de la membrane absorbante. La portion conductrice 15 est ici également formée d'une portion de la ligne conductrice du dernier niveau d'interconnexion.

On peut ensuite déposer une couche de protection 17 de manière à recouvrir la couche isolante inter-métal 13. Cette couche d'arrêt de gravure 17 est réalisée en un matériau sensiblement inerte à l'agent de gravure utilisé ultérieurement pour supprimer les couches sacrificielles minérales, par exemple au milieu HF en phase vapeur. Elle permet ainsi d'éviter que les couches isolantes minérales sous-jacentes ne soient gravées lors de cette étape de suppression des couches sacrificielles. Elle peut être formée en un oxyde ou nitrure d'aluminium, en trifluorure d'aluminium, ou en silicium amorphe intrinsèque (non intentionnellement dopé). Elle peut être déposée par exemple par PVD (pour *Physical Vapor Deposition,* en anglais) et peut présenter une épaisseur de l'ordre d'une dizaine de nanomètres à quelques centaines de nanomètres.

En référence à la fig.6B, on réalise une partie 3.1 des piliers d'ancrage 3 ainsi que le plot de contact 18. Pour cela, on dépose une première couche sacrificielle 41 sur le substrat de lecture 10, par exemple réalisée en un matériau minéral tel qu'un oxyde de silicium SiOₓ déposé par dépôt chimique en phase vapeur assisté par plasma (PECVD). Ce matériau minéral est apte à être supprimé par gravure chimique humide, en particulier par attaque chimique en milieu acide, l'agent de gravure étant de préférence de l'acide fluorhydrique (HF) en phase vapeur. Cette couche sacrificielle minérale 41 est déposée de manière à s'étendre continûment sur sensiblement toute la surface du substrat de lecture 10 et recouvrir ainsi la couche d'arrêt de gravure 17. L'épaisseur de la couche sacrificielle 41 suivant l'axe Z permet de définir la hauteur du plot de contact 18. Elle peut être de l'ordre de quelques centaines de nanomètres à quelques microns.

On réalise ensuite des orifices verticaux destinés à la formation des premières parties 3.1 des piliers d'ancrage 3 et à la formation du plot de contact 18. Ils sont réalisés par photolithographie et gravure, et traversent la première couche sacrificielle minérale 41 et la couche de protection 17, pour déboucher sur les portions conductrices 14 du circuit de lecture, et ici sur la portion conductrice 15. Les orifices verticaux peuvent présenter une section droite dans le plan (X,Y) de forme carrée, rectangulaire, ou circulaire, d'une surface sensiblement égale, par exemple, à 0,25µm². On réalise ensuite les premières parties 3.1 des piliers d'ancrage 3 ainsi que le plot de contact 18 dans les orifices verticaux. Ils peuvent être réalisés par remplissage des orifices par un ou plusieurs matériaux électriquement conducteurs. A titre d'exemple, ils peuvent comporter chacun une couche de TiN déposée par PVD ou MOCVD (pour Metal Organic Chemical Vapor Déposition, en anglais) sur les flancs verticaux des orifices, et un cœur en cuivre ou en tungstène remplissant l'espace délimité transversalement par la couche de TiN. Une étape de CMP permet ensuite de supprimer les matériaux de remplissage en excès et de planariser la face supérieure formée par la couche sacrificielle 41, les premières parties 3.1 des piliers d'ancrage 3 et le plot de contact 18.

En référence à la fig.6C, on finalise la formation des piliers d'ancrage 3. Pour cela, on dépose une deuxième couche sacrificielle 42 sur la couche sacrificielle 41, par exemple réalisée en un matériau minéral identique à celui de la couche sacrificielle 41. On réalise ensuite des orifices verticaux destinés à la formation des deuxièmes parties 3.2 des piliers d'ancrage 3. Ces orifices verticaux sont donc positionnés de manière à déboucher uniquement sur les premières parties 3.1 des piliers d'ancrage 3. On réalise ensuite les deuxièmes parties 3.2 des piliers d'ancrage 3 dans les orifices verticaux, par exemple réalisés par remplissage des orifices par un ou plusieurs matériaux électriquement conducteurs identiques à ceux des premières parties 3.1. Une étape de CMP permet ensuite de supprimer les matériaux de remplissage en excès et de planariser la face supérieure formée par la couche sacrificielle 42 et les piliers d'ancrage 3.

De préférence, on réalise une structuration locale partielle (non traversante) de la couche sacrificielle 42 en regard du plot de contact 18, à partir de la face supérieure 42a. Cette structuration locale est destinée à obtenir ultérieurement une couche 33 d'alliage à mémoire de forme présentant des motifs en saillie 34 orientés en direction de la surface de contact 18a du substrat 10. Ces motifs en saillie 34 permettent d'obtenir plus systématiquement une déformation de la partie déformable 30 en direction de la surface de contact 18 du substrat 10.

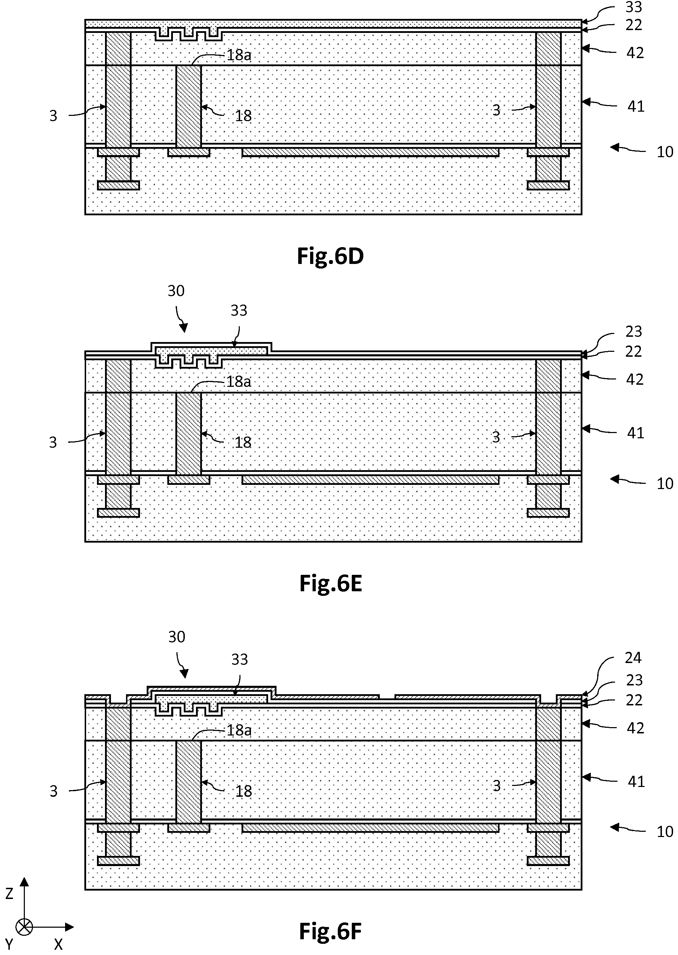

En référence à la fig.6D, on dépose une couche diélectrique inférieure 22 recouvrant la face supérieure de la deuxième couche sacrificielle 42. Elle s'étend ainsi sur la zone plane de la face supérieure ainsi que dans les structurations locales partielles, sans toutefois les remplir. La couche diélectrique inférieure 22 peut être réalisée en silicium amorphe, carbure de silicium, alumine Al₂O₃ ou nitrure d'aluminium, entre autres. Elle peut présenter une épaisseur de quelques dizaines de nanomètres, par exemple 20nm, et participe à assurer la rigidification des bras d'isolation thermique. On dépose ensuite une couche 33 d'alliage à mémoire de forme, de manière à recouvrir la couche diélectrique inférieure 22 et à remplir les structurations locales partielles. La couche 33 peut présenter une épaisseur de quelques dizaines à centaines de nanomètres, par exemple comprise entre 10 nm et 900 nm.

L'alliage à mémoire de forme peut être un alliage métallique de NiTi dont la proportion atomique de nickel et de titane, ainsi que d'éventuels éléments chimiques additionnels permettent d'obtenir une température austénitique finale A_{f} inférieure à une température seuil de protection Tₜₕ. L'alliage à mémoire de forme peut ainsi être, par exemple, du Ti_{85.3-x}NiₓHf_{14.7} avec x>50% en at.%, du Ti₈₂₋ₓNiₓZr₁₈ avec x>49% en at.%, du Ti₇Ni₁₁Zr₄₃Cu₃₉₋ₓCoₓ avec x>10% en at.%, du Ti₅₀Ni₅₀-ₓPtₓ avec x< 25% en at.%, du Ti_{50,5}Ni_{24.5}Pd₂₅, du Ti₅₁Ni₃₈Cu₁₁, du Ti₅₀₋ₓNi₅₀Cuₓ avec x>7.5 % en at.%., du TiNiCuAlMn, du CuAlNi, du TiNiMn, entre autres. Il peut également s'agir du TiTa, du TiNiPd, du TiNiHf, du TiNiZr, du TiNiZrCuCo, du CoAl, qui présentent l'avantage d'avoir une constante de temps de transformation (et donc une constante de temps dynamique Δt_{dyn}) susceptible d'être supérieure à la constante de temps thermique Δtₜₕ.

En référence à la fig.6E, on réalise la partie déformable 30 par structuration locale de la couche 33 d'alliage à mémoire de forme. Ainsi, on obtient une bande d'une longueur par exemple de l'ordre de 1 à 2µm, et d'une largeur par exemple comprise entre 0.3 et 2µm. On dépose ensuite une première couche diélectrique intermédiaire 23, par exemple réalisée en un matériau identique à celui de la couche diélectrique inférieure 22, et d'une épaisseur de quelques dizaines de nanomètres, de manière à recouvrir la couche diélectrique inférieure 22 ainsi que la bande 33 en alliage à mémoire de forme de la partie déformable 30.

En référence à la fig.6F, on grave localement les couches diélectriques 22, 23 de manière à former des ouvertures débouchant sur les piliers d'ancrage 3, et on dépose ensuite une couche conductrice 24 de manière à recouvrir la couche diélectrique intermédiaire 23 et à venir au contact des piliers d'ancrage 3 au travers des ouvertures. La couche conductrice 24 est donc en contact avec l'extrémité supérieure des piliers d'ancrage 3 et est destinée à assurer la polarisation électrique du matériau thermistance. Elle est réalisée en un matériau électriquement conducteur, par exemple du TiN d'une épaisseur de quelques de nanomètres à quelques dizaines de nanomètres, par exemple 10nm. On grave ensuite localement la couche conductrice 24 de manière à former un espacement latéral entre deux portions de la couche conductrice 24 destinées à former les électrodes de polarisation.

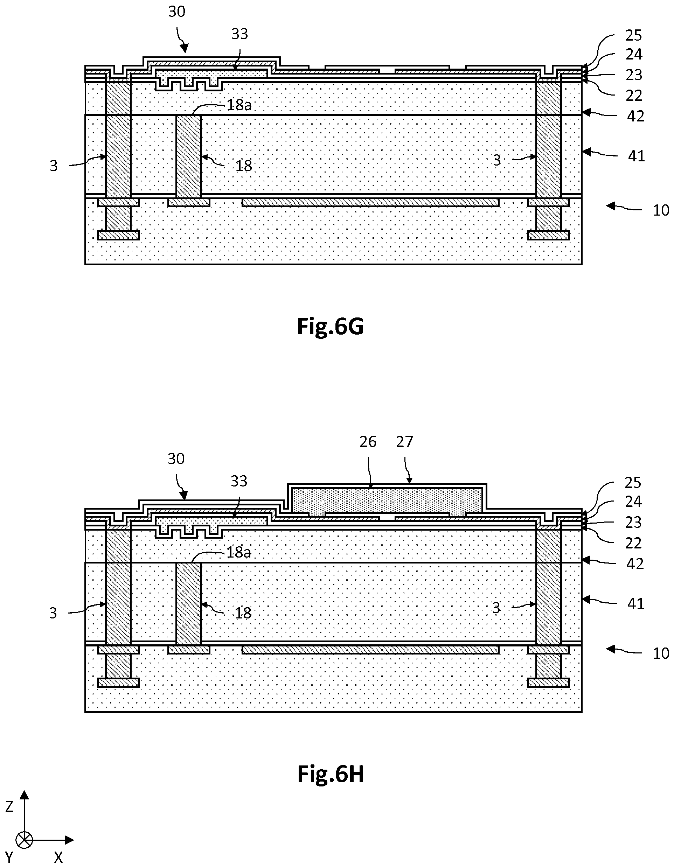

En référence à la fig.6G, on dépose ensuite une deuxième couche diélectrique intermédiaire 25 de manière à recouvrir la couche conductrice 24 et à venir au contact de la couche diélectrique intermédiaire 23 sous-jacente au travers de l'espacement latéral entre les deux électrodes de polarisation 24. Elle est de préférence réalisée en un matériau diélectrique identique à celui des couches diélectriques sous-jacentes et présente une épaisseur par exemple comprise entre quelques dizaines à centaines de nanomètres. On grave ensuite localement la couche diélectrique intermédiaire 25 de manière à former deux ouvertures débouchant sur les électrodes de polarisation 24.

En référence à la fig.6H, on dépose ensuite le matériau thermistance 26 par exemple en silicium amorphe ou en un oxyde de vanadium ou de titane, au contact électrique des électrodes de polarisation 24 via les ouvertures. Il peut présenter une épaisseur par exemple comprise entre 20nm et 200nm. Enfin, une couche supérieure de protection 27, par exemple en silicium amorphe, Al₂O₃ ou AlN d'une épaisseur comprise entre 10nm et 50nm, est déposée de manière à recouvrir le matériau thermistance 26.

En référence à la fig.6I, on grave localement l'empilement de couches diélectriques 22, 23, 25, 27 et la couche conductrice 24 de manière à former les bras d'isolation thermique ainsi que la membrane absorbante 20.

En référence à la fig.6J, on supprime les différentes couches sacrificielles de manière à suspendre la membrane absorbante 20 au-dessus du substrat de lecture. La suspension peut être effectuée après avoir réalisé l'encapsulation du détecteur thermique 1 dans un boîtier (non représenté) définissant une cavité sous vide destinée à être hermétique. La suspension peut être obtenue par gravure chimique des différentes couches sacrificielles minérales, ici par une gravure chimique humide par attaque à l'acide fluorhydrique en phase vapeur.

On obtient ainsi un dispositif de détection dont la membrane absorbante 20 du détecteur thermique 1 comporte une partie déformable 30 à alliage à mémoire de forme. La partie déformable 30 est positionnée vis-à-vis de la surface de contact 18a du substrat 10 de sorte que l'espacement maximal dₘₐₓ soit inférieur ou égal au débattement maximal Δpₘₐₓ de l'alliage à mémoire de forme. Ainsi, lors d'un échauffement important de la membrane absorbante 20 du fait d'un rayonnement électromagnétique de forte puissance, la partie déformable 30 se déforme en direction du substrat à partir de la température A*ₛ*, et ici du plot de contact, et vient contacter ce dernier à une température T_{c}. Ainsi, du fait de l'hystérésis en température de la transformation martensitique directe (de la phase austénitique à la phase martensitique), on obtient un contact thermique de bonne qualité entre la partie déformable 30 et le substrat (ici le plot de contact) améliorant la fiabilité du refroidissement de la membrane absorbante 20.

Du fait de l'hystérésis en température de la transformation martensitique inverse (de la phase martensitique à la phase austénitique), on évite ainsi que s'installe un mouvement continu d'oscillation verticale avec contacts mécaniques de courte durée de la partie déformable 30 sur le substrat. Le refroidissement de la membrane absorbante 20 est ainsi rendu plus efficace, présentant une durée plus longue et une amplitude plus importante.

De plus, lorsque l'alliage à mémoire de forme présente une constante de temps dynamique Δt_{dyn} supérieure à la constante de temps thermique Δtₜₕ associée au refroidissement de la membrane absorbante 20, l'alliage à mémoire de forme passe, lors du refroidissement de la membrane absorbante 20 en réponse au contact thermique avec le substrat, de la phase austénitique (χₘ≤0.05) à la phase martensitique (χₘ≥0.95), et passe donc à une température inférieure ou égale à la température martensitique finale M_{f}.

Des modes de réalisation particuliers viennent d'être décrits. Différentes variantes et modifications apparaîtront à l'homme du métier.

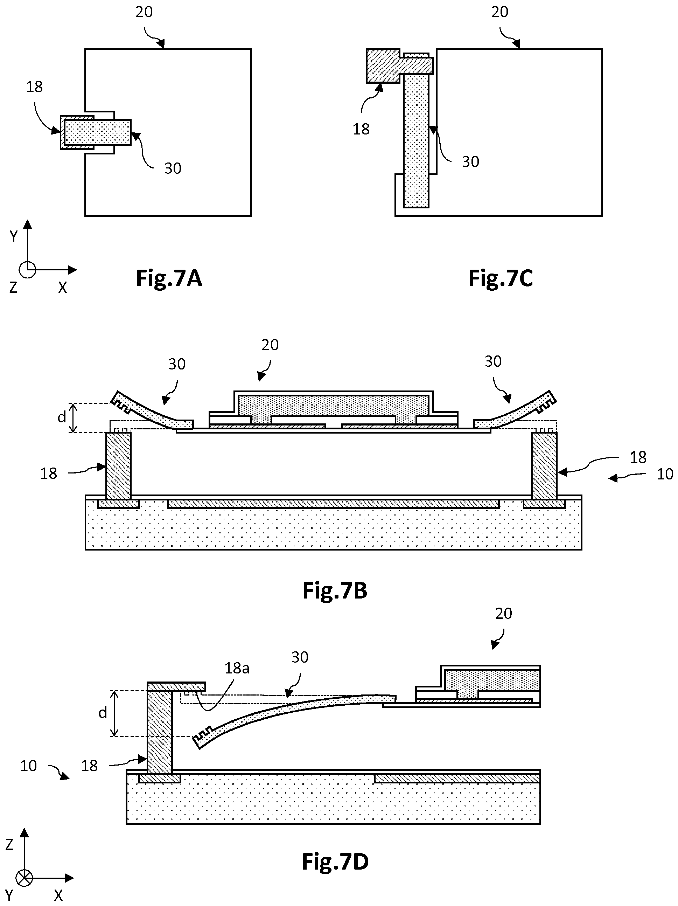

Ainsi, comme l'illustre schématiquement la figure 7A en vue de dessus, la partie déformable 30 peut être située à proximité d'un sommet de la membrane absorbante 20 dans le plan XY, ou, comme ici, au centre d'un côté de la membrane absorbante 20. Celle-ci peut présenter une échancrure dans le plan XY dans laquelle se situe la partie déformable 30, permettant ainsi de réduire le taux de remplissage (*fill factor,* en anglais) associé au pixel sensible, c'est-à-dire le rapport entre la surface de la membrane absorbante 20 (ici avec sa partie déformable 30) sur la surface totale du pixel sensible, dans le plan XY.

Par ailleurs, comme l'illustre schématiquement la figure 7B en vue en coupe, la partie déformable 30 peut présenter une forme courbée vers le haut (suivant la direction +Z) dans sa configuration de repos (basse température) et une forme sensiblement plane comme représenté en configuration de court-circuit thermique, voire une forme courbée vers le bas (suivant la direction -Z).

Par ailleurs, comme l'illustrent schématiquement la figure 7C en vue de dessus et la figure 7D en vue en coupe, la partie déformable 30 peut présenter une forme courbée vers le bas (suivant la direction -Z) en configuration de repos, et une forme sensiblement plane comme représenté en configuration de court-circuit thermique, voire une forme courbée vers le haut. Dans ce cas, le plot de contact 18 présente une portion en saillie dans le plan XY assurant une surface de contact 18a vis-à-vis de la partie déformable 30.

## Revendications

1. Détecteur thermique (1) adapté à détecter un rayonnement électromagnétique, comportant :
∘ un substrat (10) ;
∘ une membrane absorbante (20) du rayonnement électromagnétique, thermiquement isolée vis-à-vis du substrat (10), et comportant :
▪ une partie fixe (21) dite de détection comportant un transducteur thermométrique (26),
▪ une partie déformable (30) dite de court-circuit thermique,
- comportant une extrémité fixe (31) assemblée à la partie fixe de détection (21), et une extrémité libre (32) opposée,
- adaptée à se déformer sous l'effet d'une variation de température de la membrane absorbante (20), de sorte que l'extrémité libre (32) de la partie déformable (30) vienne au contact du substrat (10) à une température dite de contact T_{c} de la membrane absorbante (20) ;
∘ **caractérisé en ce que** la partie déformable (30) :
▪ comporte un alliage à mémoire de forme présentant une transformation martensitique dite inverse d'une phase martensitique en une phase austénitique dudit alliage entre des températures dites austénitiques initiale A*ₛ* et finale A_{f}, et une transformation martensitique dite directe de la phase austénitique en la phase martensitique entre des températures dites martensitiques initiale M*ₛ* et finale M_{f}, la température austénitique finale A_{f} étant supérieure à la température martensitique initiale M*ₛ*, et
▪ est disposée vis-à-vis du substrat (10) de sorte que l'extrémité libre (32) est au contact du substrat (10) à la température de contact T_{c} supérieure à la température austénitique initiale A*ₛ*.

2. Détecteur thermique (1) selon la revendication 1, dans lequel la partie déformable (30) :
∘ présente un débattement maximal Δpₘₐₓ entre une première position pᵣ de l'extrémité libre (32) pour une température Tₘ de la membrane absorbante (20) inférieure ou égale à la température martensitique finale M_{f}, et une deuxième position p_{d,max} de l'extrémité libre (32) correspondant à une température Tₘ supérieure ou égale à la température austénitique finale A_{f}, et
∘ est positionnée vis-à-vis du substrat (10) de sorte qu'une distance maximale dₘₐₓ séparant l'extrémité libre (32) occupant la première position pᵣ et une surface de contact (18a) du substrat (10) sur laquelle l'extrémité libre (32) est au contact à la température de contact T_{c} est inférieure ou égale au débattement maximal Δpₘₐₓ.

3. Détecteur thermique (1) selon la revendication 1 ou 2, dans lequel l'alliage à mémoire de forme est un alliage métallique à base de NiTi.

4. Détecteur thermique (1) selon l'une quelconque des revendications 1 à 3, dans lequel l'alliage à mémoire de forme est un alliage métallique choisi parmi le Ti_{50,5}Ni_{24.5}Pd₂₅, le Ti_{85.3-x}NiₓHf_{14.7} avec x>50%at, et le Ti₇Ni₁₁Zr₄₃Cu₃₉₋ₓCoₓ avec x> 10%at.

5. Détecteur thermique (1) selon l'une quelconque des revendications 1 à 4, dans lequel le substrat (10) présente une surface de contact (18a) sur laquelle l'extrémité libre (32) est au contact à la température de contact T_{c}, et dans lequel l'alliage à mémoire de forme présente une forme de bande longitudinale entre l'extrémité fixe (31) et l'extrémité libre (32), dont une face orientée vers la surface de contact (18a) du substrat (10) présentant des motifs en saillie (34).

6. Détecteur thermique (1) selon l'une quelconque des revendications 1 à 5, dans lequel le substrat (10) présente une face supérieure (10a) plane, et comporte un plot de contact (18) qui s'étend à partir de la face supérieure (10a) et présente une surface de contact (18a) sur laquelle l'extrémité libre (32) est au contact à la température de contact T_{c}.

7. Détecteur thermique (1) selon l'une quelconque des revendications 1 à 6, dans lequel le substrat (10) présente une face supérieure (10a) plane, et dans lequel la membrane absorbante (20) est maintenue au-dessus de la face supérieure (10a) du substrat (10) par des bras d'isolation thermique (4), et par des piliers d'ancrage (3) qui s'étendent de manière sensiblement orthogonale au plan de la face supérieure (10a) du substrat (10).

8. Détecteur thermique (1) selon les revendications 6 et 7, dans lequel le plot de contact (18) est réalisé en au moins un matériau thermiquement conducteur identique à celui des piliers d'ancrage (3).

9. Procédé de fabrication du détecteur thermique (1) selon l'une quelconque des revendications précédentes, comportant les étapes suivantes :
∘ fourniture d'un substrat (10) présentant une surface dite de contact (18a) ;
∘ dépôt d'au moins une couche sacrificielle (41, 42) ;
∘ réalisation de piliers d'ancrage (3) au travers de la couche sacrificielle (41, 42) ;
∘ réalisation de bras d'isolation thermique et d'une membrane absorbante (20) sur la couche sacrificielle (41, 42), la membrane absorbante (20) comportant une partie déformable (30) située en regard de la surface de contact (18a) ;
∘ suppression de la couche sacrificielle (41, 42).
